# EUROPÄISCHE PATENTSCHRIFT

(11) **EP 1 076 621 B1**
(45) Veröffentlichungstag und Bekanntmachung des Hinweises auf die Patenterteilung: **27.12.2006**
(21) Anmeldenummer: 99959235.5
(22) Anmeldetag: 06.11.1999
(51) Int. Cl.: B60S 1/34

(54) **VORRICHTUNG ZUM BEFESTIGEN EINES BAUTEILS AUF EINER ANTRIEBSWELLE EINER WISCHERANLAGE**
DEVICE FOR FIXING A PART ON A DRIVE SHAFT OF A WIPER SYSTEM
DISPOSITIF POUR FIXER UNE PIECE SUR UN ARBRE D'ENTRAINEMENT D'UN SYSTEME D'ESSUIE-GLACE

(30) Priorität: 06.03.1999 DE 19909970
(43) Veröffentlichungstag der Anmeldung: 21.02.2001
(73) Patentinhaber: ROBERT BOSCH GMBH, 70442 Stuttgart (DE)
(72) Erfinder: ZIMMER, Joachim, D-77880 Sasbach (DE)
(86) Internationale Anmeldenummer: PCT/DE1999/003556
(87) Internationale Veröffentlichungsnummer: WO 2000/053469

(56) Entgegenhaltungen:
- DE-A- 4 428 371
- GB-A- 882 303
- US-A- 3 085 821
- US-A- 3 429 597

## Beschreibung

### Stand der Technik

Die Erfindung geht aus von einer Vorrichtung zum Befestigen eines Bauteils auf einer Antriebswelle einer Wischeranlage nach dem Oberbegriff des Anspruchs 1, wie aus US 3085821 A bekannt.

Wischeranlagen mit mehreren Scheibenwischern für Kraftfahrzeuge werden mit deren Wischerlagern direkt oder indirekt über eine Platine an der Karosserie des Kraftfahrzeugs befestigt. Die Platine trägt einen Wischerantrieb mit einem Wischermotor, dessen Motorwelle über ein Gestänge Kurbeln antreibt, die mit einem Ende einer Antriebswelle für jeden Scheibenwischer fest verbunden sind. Ferner ist möglich, daß nur die Antriebswelle eines Scheibenwischers vom Wischermotor angetrieben wird, während ein anderer Scheibenwischer über ein Viergelenkhebelgetriebe mit dem ersten Scheibenwischer verbunden ist und eine Lagerachse besitzt. Die Antriebswelle bzw. die Lagerachse ist in einem Wischerlager gelagert. Im Folgenden treffen die Ausführungen zu einer Antriebswelle für eine Lagerachse sinngemäß zu, die nicht mehr ausdrücklich genannt wird.

Im Lagergehäuse ist mindestens ein radiales Lager und an den Stirnseiten zwischen dem Lagergehäuse und einem mit der Antriebswelle fest verbundenen Teil ein axiales Lager vorgesehen. Die Antriebswelle ragt aus der Karosserie und bewegt einen an ihrem freien Ende befestigten Wischarm mit einem Wischblatt über eine Windschutzscheibe. Der Wischarm besitzt ein mit der Antriebswelle drehfest verbundenes Befestigungsteil, das gelenkig mit einem Gelenkteil verbunden ist, an das sich starr eine Wischstange anschließt. Ferner ist möglich, daß der Wischarm nicht direkt mit der Antriebswelle verbunden ist, sondern über ein Hebelgetriebe mit einem auf der Antriebswelle drehfest verbundenen Antriebshebel angetrieben wird. Die nachfolgenden Ausführungen zur Verbindung des Befestigungsteils mit der Antriebswelle gelten auch für einen Antriebshebel, der nicht mehr ausdrücklich genannt wird.

Bei bekannten Scheibenwischern weist das Wellenende einen Außenkonus auf, auf den das Befestigungsteil mit einem passenden Innenkonus aufgedrückt und mittels einer Mutter festgeklemmt wird. Bei dieser Art der Verbindung können sich Fertigungstoleranzen ungünstig addieren, so daß eine genaue Position des Befestigungsteils relativ zur Antriebswelle nur schwer gewährleistet werden kann. Ferner wirkt sich das Anzugsmoment der Mutter auf die Lage des Wischarms aus.

Aus der DE 44 28 371 A1 ist eine Wellennabenverbindung eines Wischers bekannt, bei der die Antriebswelle einen von der Kreissymmetrie abweichenden Querschnittbereich und eine Anlageschulter aufweist. Zwischen die Antriebswelle und dem Befestigungsteil ist ein Druckstück eingelegt, das eine Öffnung aufweist, die bereits vor der Montage entsprechend dem von der Kreissymmetrie abweichenden Querschnittsbereich ausgeführt ist und die Antriebswelle formschlüssig umgreift. Ferner besitzt das Druckstück einen Außenkonus, mit dem es über ein lösbares Befestigungselement auf der Antriebswelle in einen entsprechend geformten Innenkonus des Befestigungsteils gedrückt wird. Das Befestigungsteil wird von dem Befestigungselement über das Druckstück auf die Anlageschulter gepreßt und in Wellenlängsrichtung fixiert.

Bei der vorgeschlagenen Lösung beeinflussen Fertigungstoleranzen nur im geringen Maß die Positioniergenauigkeit des Wischarms. Der Wischarm kann mit einem hohen Anzugsmoment ohne Einfluß auf die Positioniergenauigkeit des Wischarms befestigt werden.

Aus der US 30 85 821 ist eine Wellennabenverbindung bekannt, bei der ein Befestigungsteil einen Innenkonus mit einer gerändelten bzw. gezackten Oberfläche aufweist. Ferner besitzt eine Antriebswelle einen zylindrischen oder konischen Bereich mit einer gerändelten bzw. gezackten Oberfläche. Bei der Montage wird über eine Mutter ein verformbares Druckstück mit einem Außenkonus zwischen das Befestigungsteil und die Antriebswelle gepreßt. Durch die konische Verbindung zwischen dem Befestigungsteil und dem Druckstück und gegebenenfalls durch die konisch Verbindung zwischen dem Druckstück und der Antriebswelle, wird die gezackte Oberfläche des Befestigungsteils und der Antriebswelle in bis dahin weitgehend glatte Oberflächen des Druckstücks gedrückt und verformen diese dauerhaft. Neben einem Kraftschluß wird durch viele kleine Seitenflächen der Zacken ein unterstützender Formschluß erreicht.

Das Befestigungsteil überträgt das Antriebsmoment von der Antriebswelle über das Gelenkteil und über die Wischstange auf das Wischblatt. Ferner bildet es einen Teil des Kniegelenks, über das das Befestigungsteil mit dem Gelenkteil mit einer Zugfeder verspannt und in Richtung Kraftfahrzeugscheibe gedrückt wird. Im Befestigungsteil entstehen die größten Kräfte bzw. Momente parallel und senkrecht zur Kraftfahrzeugscheibe. Ferner wirken sich Verformungen und Spiel im unteren Bereich des Scheibenwischers besonders stark über die gesamte Länge aus und können durch einen Federeffekt zu ungleichmäßigen Wischgeschwindigkeiten führen. Die Antriebswelle und das Befestigungsteil sollten daher dauerhaft spielfrei verbunden werden. Ferner sollte der Wischarm mit dem Befestigungsteil und dem Druckstück leicht montierbar und demontierbar sein.

### Vorteile der Erfindung

Die erfindungsgemäße Vorrichtung besitzt eine Antriebswelle mit einem von der Kreissymmetrie abweichenden Querschnittsbereich, auf dem ein Druckstück formschlüssig mit einer Öffnung gelagert ist, die bereits vor der Montage entsprechend dem von der Kreissymmetrie abweichenden Querschnittsbereich ausgeführt ist. Der von der Kreissymmetrie abweichende Querschnittsbereich der Antriebswelle besitzt in Montagerichtung zumindest in einem Bereich einen zunehmenden Durchmesser bzw. ist konisch ausgeführt, wodurch das Druckstück neben einem das Antriebsmoment übertragenden Formschluß kraftschlüssig spielfrei mit der Antriebswelle verbunden ist. Ferner trifft beim Aufschieben des Druckstücks zuerst ein größerer Innendurchmesser des Druckstücks auf einen kleineren Außendurchmesser der Antriebswelle, wodurch das Druckstück leicht montiert werden kann.

Das Druckstück kann aus hartem Material gebildet werden, das seine Form während des Betriebs beibehält und dauerhaft spielfrei befestigt werden kann. Eine plastische Verformung für den Formschluß wird vermieden und das Druckstück kann mehrfach verwendet werden. Die Öffnung des Druckstücks kann mit gleichbleibendem Durchmesser oder vorteilhaft mit einem der Antriebswelle entsprechenden, d.h. in Montagerichtung zunehmendem Durchmesser ausgeführt werden. In einem Spritzgußverfahren hergestellte Druckstücke können mit einer konischen Öffnung leicht aus einer Gußform gelöst werden, insbesondere Druckstücke aus Aluminium oder eine Aluminiumlegierung. Die Lagerflächen müssen nicht oder nur geringfügig nachbearbeitet werden und die Gußform wird beim Entformen weniger verschlissen. Die Standzeiten steigen und die Fertigungskosten sinken.

Gemäß der Erfindung wird der Formschluß zwischen der Antriebswelle und dem Druckstück mit wenig großen tragenden Flächen geschaffen, und zwar von zwei bis sechs Flächen. Das Druckstück kann mit einer entsprechend geformten Öffnung bei einer geringen elastischen Verformung und Verspannung mit einer weitgehend gleichmäßigen Flächenpressung durch die konische Verbindung spielfrei auf den Flächen zum Liegen gebracht werden. Trotz einer spielfreien Lagerung des Druckstücks auf der Antriebswelle, kann das Druckstück und ein Befestigungsteil mit einer kleinen Kraft in axialer Richtung von der Antriebswelle abgezogen bzw. demontiert werden. Ferner lassen sich wenig tragende Flächen im Druckstück und auf der Antriebswelle kostengünstig mit kleinen Toleranzen herstellen. Die Antriebswelle kann mit einer polygonförmigen oder unrunden, z.B. einer beliebig ellipsenförmigen Außenkontur und das Druckstück mit einer passenden Innenkontur ausgeführt werden. Zwei-, vier- oder sechkantige Querschnittsflächen können einfach durch Fräsen hergestellt werden. Kostengünstiger ist jedoch eine gleichzeitig beim Drehen der Antriebswelle hergestellte unrunde bzw. ellipsenförmige Außenkontur. Der Fertigungsaufwand und die Umrüstzeiten werden reduziert.

Auf dem von der Kreissymmetrie abweichenden Querschnittsbereich kann zudem das Befestigungsteil direkt durch den zunehmenden Durchmesser auf einer Anlageschulter und/oder vorteilhaft auf einer auf der Antriebswelle aufgepreßten Scheibe in Montagerichtung abgestützt werden. Mit einer Scheibe kann der Durchmesser der Antriebswelle kleiner und dadurch die Antriebswelle kostengünstiger ausgeführt werden. Die Scheibe kann durch den zunehmenden Durchmesser des von der Kreissymmetrie abweichenden Querschnittsbereichs vorteilhaft kraftschlüssig mit der Antriebswelle verbunden werden. Die Scheibenwischanlage mit den Antriebswellen und der Wischarm mit dem Wischblatt werden in der Regel getrennt zu einem Autohersteller geliefert. Durch die kraftschlüssige Verbindung zwischen der Scheibe und der Antriebswelle, ist die Scheibe vorteilhaft unverlierbar mit der Scheibenwischanlage verbunden. Um eine plastische Verformung zu erhöhen und den Kraftschluß zwischen der Scheibe und der Antriebswelle zu steigern, wird in einer Ausgestaltung vorgeschlagen, daß der von der Kreissymmetrie abweichende Querschnittsbereich zusätzlich zur konischen Kontur eine Phase aufweist, auf die die Scheibe gepreßt wird.

Neben der kraftschlüssigen Verbindung wird die Scheibe zudem vorteilhaft an einer Anlageschulter abgestützt. Die Scheibe kann dadurch schnell an einer exakten Stelle der Antriebswelle montiert werden. Das Druckstück und das Befestigungsteil kann über die Scheibe auf der Anlageschulter abgestützt werden. Der Kraftschluß zwischen der Scheibe und der Antriebswelle muß nur ausreichend groß gewählt werden, daß die Scheibe während dem Transport unverlierbar gesichert ist. Grundsätzlich möglich ist jedoch, das Druckstück und das Befestigungsteil auf einer ausschließlich kraftschlüssig befestigten Scheibe abzustützen.

Damit der Wischarm von einer bestimmten Parkstellung über einen definierten Winkel über eine Windschutzscheibe wischt, und die Ausgangslage der Antriebswelle aufgrund Fertigungstoleranzen eines übertragenden Gestänges vom Wischermotor zur Antriebswelle nicht genau bestimmbar ist, sollte der Wischarm mit dem Befestigungsteil stufenlos verdreht auf der Antriebswelle montierbar sein. Dies wird mit einer in erster Linie kraftschlüssigen Verbindung zwischen dem Druckstück und dem Befestigungsteil erreicht, die stufenlos zueinander verdreht montiert werden können. Um neben einem Kraftschluß einen unterstützenden Formschluß zwischen dem Druckstück und dem Befestigungsteil zu erreichen, wird vorgeschlagen, den Innenkonus vom Befestigungsteil und/oder den Außenkonus des Druckstücks gerändelt auszuführen. In einer weiteren Ausgestaltung wird vorgeschlagen, das Druckstück aus einem weicheren Material herzustellen, insbesondere aus Aluminium, einer Aluminiumlegierung, Zink, Kunststoff usw. Der Rändel am Innenkonus des Befestigungsteils greift tiefer in die Oberfläche des Druckstücks und der Formschluß wird verbessert. Aluminium ist zudem leicht und fließt nicht, was dazu führen könnte, daß das übertragbare Drehmoment unter das Drehmoment der Antriebswelle sinkt und diese mit dem Druckstück im Befestigungsteil durchrutscht. Anstatt das Druckstück vollständig aus einem weicheren Material herzustellen, kann der Außenkonus des Druckstücks oder der Innenkonus des Befestigungsteils mit einem weicheren Material beschichtet werden, z.B. mit Aluminium, Kunststoff usw. Das Drehmoment kann von der Antriebswelle formschlüssig auf das Druckstück zwischen harten Materialien übertragen werden, wodurch das Befestigungsteil und das Druckstück von der Antriebswelle leicht demontierbar sind. Ferner kann mit einer weichen Materialschicht auf dem Außenkonus des Druckstücks oder auf dem Innenkonus des Befestigungsteils ein Kraftschluß zwischen dem Druckstück und dem Befestigungsteil vorteilhaft durch einen guten Formschluß unterstützt werden.

Neben einem weicheren Material kann die Flächenpressung zwischen dem Befestigungsteil und dem Druckstück durch bestimmte Konturen erhöht und dadurch der Formschluß verbessert werden, vorzugsweise durch einen in Wellenlängsrichtung gestuft ausgeführten Außenkonus des Druckstücks oder Innenkonus des Befestigungsteils. Mit einer gestuften Außenkontur des Druckstücks, läßt sich dieses zudem leichter aus einer Gußform entfernen. Mit einer gerändelten Oberfläche, einem weicheren Druckstück und/oder einer höheren Flächenpressung können ferner Fertigungstoleranzen vom Außenkonus des Druckstücks und vom Innenkonus des Befestigungsteils besser ausgeglichen und das Druckstück und das Befestigungsteil spielfrei mit einem sicheren Halt verbunden werden.

Bei der erfindungsgemäßen Anordnung besitzt der Innenkonus des Befestigungsteils einen in Montagerichtung kleiner werdenden Durchmesser. In einer Ausgestaltung wird vorgeschlagen, das Befestigungsteil als Blechteil auszuführen. Das Blechteil kann vorteilhaft von einer Seite in einem oder mehreren Tiefziehvorgängen hergestellt werden, und zwar in Montagerichtung von der oberen Seite. Ferner wird das Drehmoment von der Antriebswelle auf einem kleinen Durchmesser über einen Formschluß auf das Druckstück und auf einem großen Durchmesser über einen Kraftschluß und Formschluß auf das Befestigungsteil übertragen. Mit zunehmendem Durchmesser nimmt der wirkende Hebelarm einer Reaktionskraft und damit die zwischen den Bauteilen wirkende Querkraft ab. Das Drehmoment kann bei einem größeren Durchmesser mit einer kleineren Flächenpressung mit einem Kraftschluß sicher übertragen werden, wodurch besonders vorteilhaft ein Blechteil als Befestigungsteil verwendet werden kann. Mit einem als Blechteil ausgeführten Befestigungsteil können Gewicht, Fertigungsaufwand und Kosten eingespart werden.

### Zeichnung

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: einen Ausschnitt einer Wischanlage mit einem Wischarm,
- Fig. 2: einen Wischarm mit einem Wischblatt von oben,
- Fig. 3: einen vergrößerten Ausschnitt eines Schnitts entlang der Linie III-III in Fig. 2,
- Fig. 4: eine Antriebswelle von oben,
- Fig. 5: einen Ausschnitt aus der Richtung V in Fig. 4,
- Fig. 6: einen vergrößerten Ausschnitt VI in Fig. 5,
- Fig. 7: eine Scheibe von oben,
- Fig. 8: eine Variante nach Fig. 4,
- Fig. 9: einen Ausschnitt eines Befestigungsteils im Schnitt,
- Fig. 10: einen Ausschnitt eines Befestigungsteils von oben,
- Fig. 11: ein Druckstück im Schnitt,
- Fig. 12: ein Druckstück von der Seite,
- Fig. 13: ein Druckstück von oben,
- Fig. 14: einen vergrößerten Ausschnitt XIV in Fig. 11 und
- Fig. 15: eine Variante nach Fig. 11.

### Beschreibung der Ausführungsbeispiele

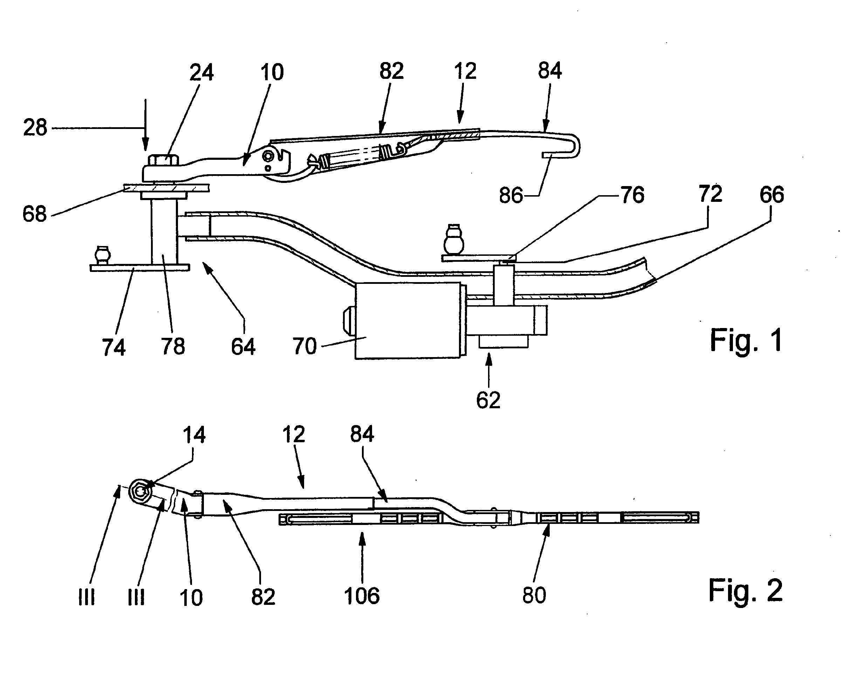

Fig. 1 zeigt einen Ausschnitt einer Wischeranlage 62 für ein Kraftfahrzeug, deren Wischerlager 64 über eine Platine 66 an der Karosserie 68 des Kraftfahrzeugs befestigt sind. Die Platine 66 trägt einen Wischerantrieb mit einem Wischermotor 70, dessen Motorwelle 72 über eine Kurbel 76 und ein nicht näher dargestelltes Gestänge Kurbeln 74 antreibt, die jeweils mit einem Ende einer Antriebswelle 14 für einen Scheibenwischer 106 fest verbunden sind. Die Antriebswelle 14 ist in einem Wischerlager 78 radial und axial gelagert, ragt aus der Karosserie 68 und bewegt einen an ihrem freien Ende befestigten Wischarm 12 mit einem Wischblatt 80 über eine Windschutzscheibe (Fig. 2). Der Wischarm 12 besitzt ein mit der Antriebswelle 14 verbundenes Befestigungsteil 10, das gelenkig mit einem Gelenkteil 82 verbunden ist, an das sich starr eine Wischstange 84 anschließt. In die Wischstange 84 wird an einem bügelförmigen Ende 86 das Wischblatt 80 eingehängt.

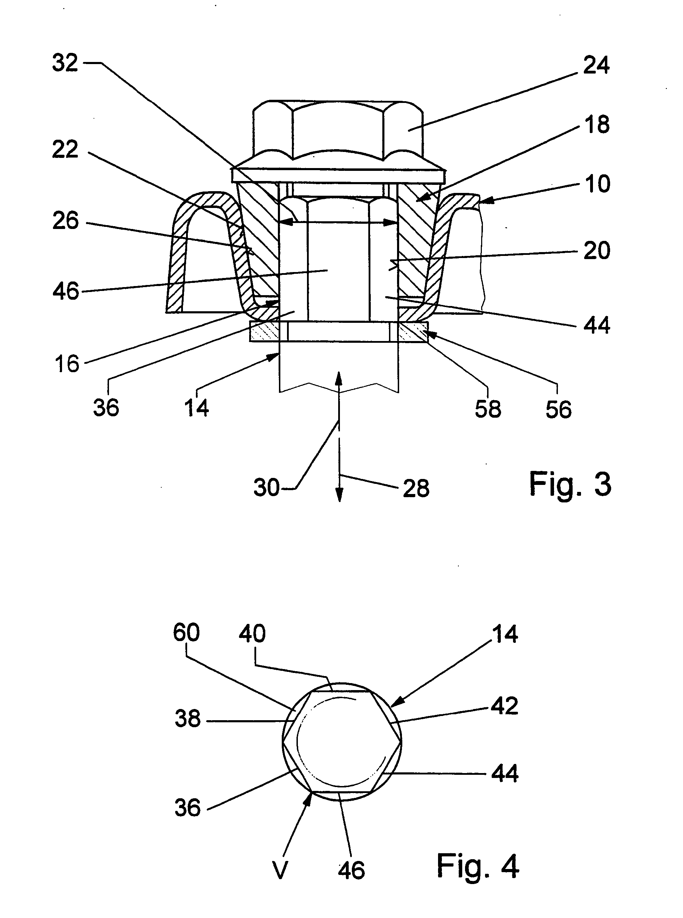

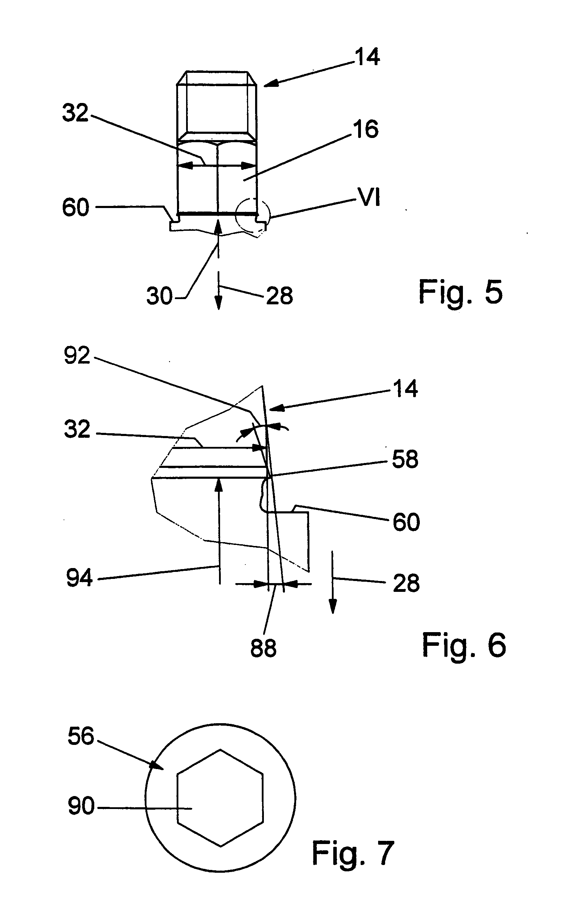

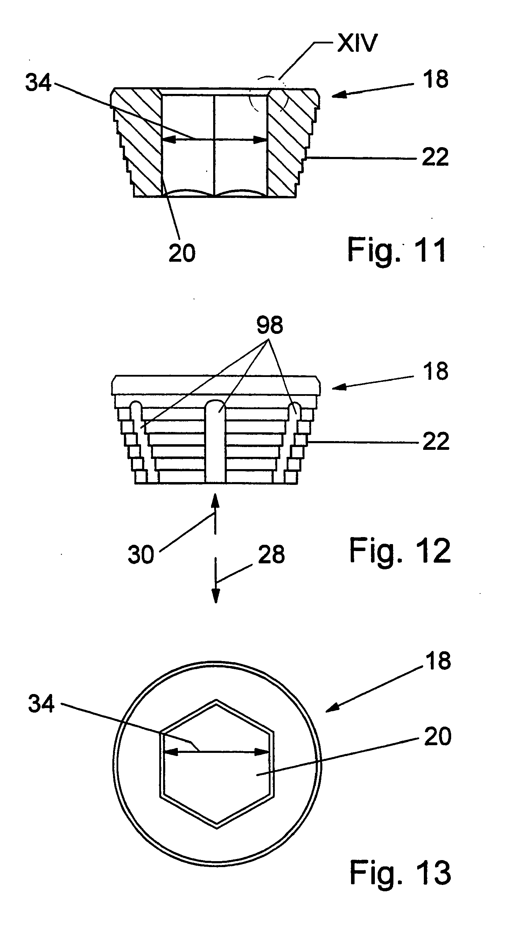

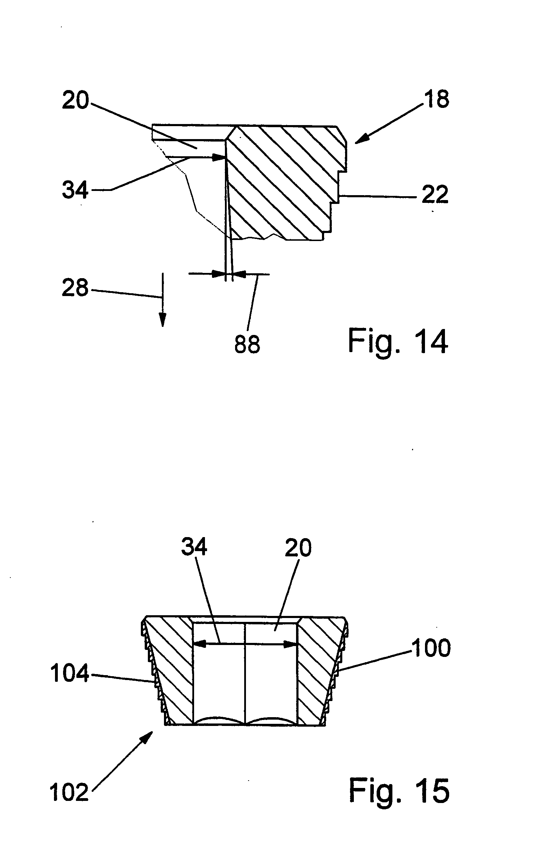

Die Antriebswelle 14 besitzt einen von der Kreissymmetrie abweichenden Querschnittsbereich 16, und zwar einen Sechskant (Fig. 3 und 4). Zwischen dem Befestigungsteil 10 und der Antriebswelle 14 ist ein Druckstück 18 eingelegt, das eine dem von der Kreissymmetrie abweichenden Querschnittsbereich 16 entsprechend ausgeführte Öffnung 20 (Fig. 13) bereits vor der Montage aufweist und die Antriebswelle 14 formschlüssig umgreift. Das Druckstück 18 besitzt einen Außenkonus 22, mit dem es über eine Mutter 24 auf der Antriebswelle 14 in einen entsprechend geformten Innenkonus 26 des Befestigungsteils 10 gedrückt und gemeinsam mit dem Befestigungsteil 10 in Montagerichtung 28 über ein Scheibe 56 an einer Anlageschulter 60 (Fig. 4, 5 und 6) abgestützt und in Wellenlängsrichtung 28, 30 fixiert ist. Erfindungsgemäß besitzt der von der Kreissymmetrie abweichende Querschnittsbereich 16 der Antriebswelle 14 einen in Montagerichtung 28 zunehmenden Durchmesser 32 bzw. ist konisch ausgeführt, und zwar mit einem Winkel 88 von ca. 1 bis 2° (Fig. 6). Die Öffnung 20 besitzt einen dem Querschnittsbereich 16 entsprechenden Durchmesser 34, bzw. ist konisch ausgeführt, und zwar ebenfalls mit einem Winkel 88 von ca. 1 bis 2° (Fig. 11 und 14).

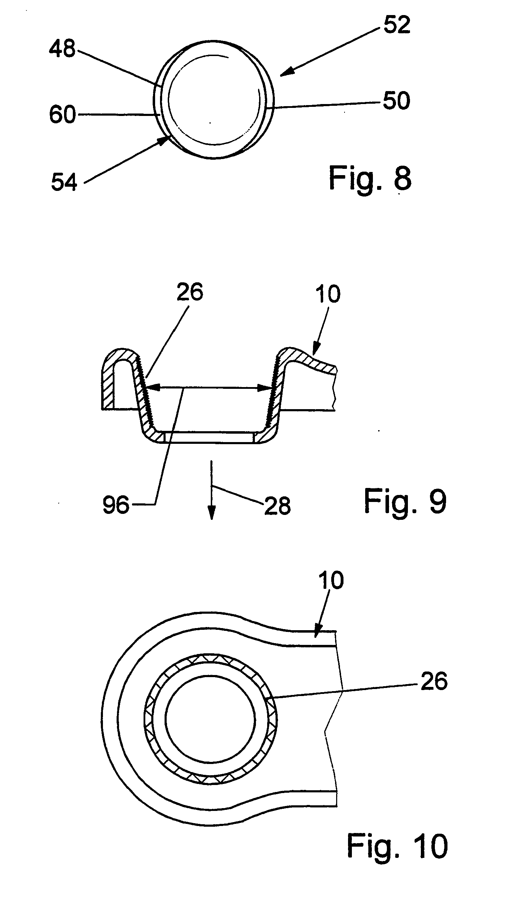

Der das Drehmoment übertragende Formschluß zwischen der Antriebswelle 14 und dem Druckstück 18 wird mit wenig großen tragenden Flächen 36, 38, 40, 42, 44, 46 des Sechskants geschaffen (Fig. 4). Das Druckstück 18 kann bei einer geringen elastischen Verformung und Verspannung mit einer weitgehend gleichmäßigen Flächenpressung durch die konische Verbindung spielfrei auf den Flächen 36, 38, 40, 42, 44, 46 zum Liegen gebracht werden. Das Druckstück 18 ist spielfrei auf der Antriebswelle 14 gelagert und kann zudem gemeinsam mit dem Befestigungsteil 10 leicht in axialer Richtung 30 von der Antriebswelle 14 abgezogen werden. Anstatt einem Sechskant kann eine Antriebswelle 52 mit einem elliptischen Querschnittsbereich 54 ausgeführt werden, wie in Fig. 8 dargestellt, der mit zwei tragenden Flächen 48, 50 formschlüssig mit einem entsprechend geformten Druckstück verbunden werden kann.

Die Scheibe 56 weist eine dem Sechskant entsprechend geformte Öffnung 90 auf (Fig. 7). Um die Scheibe 56 verliersicher auf der Antriebswelle 14 zu befestigen, besitzt der Querschnittsbereich 16 eine Phase 58, auf die die Scheibe 56 kraftschlüssig gepreßt ist (Fig. 3 und 6). Die Phase 58 erstreckt sich vorteilhaft über eine Wellenlänge 94 von ca. 0,5 mm und hat einen Winkel 92 von ca. 20°. Ferner wäre möglich, die Scheibe 56 allein auf dem konischen Querschnittsbereich 16 kraftschlüssig verliersicher zu befestigen.

Um zwischen dem Druckstück 18 und dem Befestigungsteil 10 neben einem Kraftschluß einen unterstützenden Formschluß zu erhalten, ist der Innenkonus 26 des Befestigungsteils 10 gerändelt (Fig. 9 und 10). Bei der erfindungsgemäßen Anordnung ist das Befestigungsteil 10 vorteilhaft als tiefgezogenes Blechteil ausgeführt. Der Innenkonus 26 weist einen in Montagerichtung 28 abnehmenden Durchmesser 96 auf, wodurch das Befestigungsteil 10 von einer Seite in einem oder mehreren Tiefziehvorgängen kostengünstig hergestellt werden kann, und zwar in Montagerichtung 28 von der oberen Seite. Mit einem als Blechteil ausgeführten Befestigungsteil 10 können Gewicht, Material, Fertigungsaufwand und Kosten eingespart werden.

Das Druckstück 18 ist aus Aluminium. Der Rändel am Innenkonus 26 des Befestigungsteils 10 kann tief in die Oberfläche des Druckstücks 18 gepreßt und dadurch ein guter Formschluß erreicht werden. Ferner wird der Formschluß mit einem in Längsrichtung 28, 30 gestuft ausgeführten Außenkonus 22 des Druckstücks 18 und mit in Längsrichtung 28, 30 verlaufenden über den Umfang verteilten Einbuchtungen 98 unterstützt (Fig. 11 und 12). Die Flächenpressung wird erhöht, der Eingriff des Rändels und der Ausgleich von Toleranzen verbessert. In Fig. 15 ist ein Druckstück 102 dargestellt, bei dem nur dessen Außenkonus 100 mit einem weicheren Material 104 beschichtet ist, und zwar mit Aluminium.

### Bezugszeichen

- 10: Befestigungsteil
- 12: Wischarm
- 14: Antriebswelle
- 16: Querschnittsbereich
- 18: Druckstück
- 20: Öffnung
- 22: Außenkonus
- 24: Befestigungselement
- 26: Innenkonus
- 28: Montagerichtung
- 30: Wellenlängsrichtung
- 32: Durchmesser
- 34: Durchmesser
- 36: Fläche
- 38: Fläche
- 40: Fläche
- 42: Fläche
- 44: Fläche
- 46: Fläche
- 48: Fläche
- 50: Fläche
- 52: Antriebswelle
- 54: Querschnittsbereich
- 56: Scheibe
- 58: Phase
- 60: Anlageschulter
- 62: Wischeranlage
- 64: Wischerlager
- 66: Platine
- 68: Karosserie
- 70: Wischermotor
- 72: Motorwelle
- 74: Kurbel
- 76: Kurbel
- 78: Wischerlager
- 80: Wischblatt
- 82: Gelenkteil
- 84: Wischstange
- 86: Ende
- 88: Winkel
- 90: Öffnung
- 92: Winkel
- 94: Wellenlänge
- 96: Durchmesser
- 98: Einbuchtungen
- 100: Außenkonus
- 102: Druckstück
- 104: Material
- 106: Scheibenwischer

## Patentansprüche

1. Vorrichtung zum Befestigen eines Bauteils (10) auf einer Antriebswelle(14, 52) einer Wischeranlage (62), wobei die Antriebswelle (14, 52) zumindest einen von der Kreissymmetrie abweichenden Querschnittsbereich (16) aufweist und mit einem Druckstück (18, 102), das zwischen der Antriebswelle (14,52) und dem Bauteil (10) eingelegt ist, eine dem von der Kreissymmetrie abweichenden Querschnittsbereich (16, 54) entsprechend geformte Öffnung (20) bereits vor der Montage aufweist und die Antriebswelle (14, 52) formschlüssig umgreift und einen Außenkonus (22, 100) aufweist, mit dem es über ein lösbares Befestigungselement (24) auf der Antriebswelle (14, 52) in einen entsprechend geformten Innenkonus (26) des Bauteils (10) gedrückt und gemeinsam mit dem Bauteil (10) in Wellenlängsrichtung (28, 30) fixiert ist, wobei der von der Kreissymmetrie abweichende Querschnittsbereich (16, 54) der Antriebswelle (14, 52) zumindest in einem Bereich in Montagerichtung (28) einen zunehmenden Durchmesser (32) aufweist und das Druckstück (18, 102) auf dem Querschnittsbereich (16, 54) kraftschlüssig spielfrei fixiert ist, **dadurch gekennzeichnet, dass** das Druckstück (18, 102) und die Antriebswelle (14, 52) über zwei bis sechs große tragende Flächen (36, 38, 40, 42, 44, 46, 48, 50) formschlüssig verbunden sind, und dass der von der Kreissymmetrie abweichende Querschnittsbereich (16) als Zwei-, Vier- oder Sechskant oder elipsenförmig ausgeführt ist.

2. Vorrichtung nach Anspruch 1, **dadurch gekennzeichnet, dass** die Öffnung (20) des Druckstücks (18, 102) einen dem Querschnittsbereich (16, 54) entsprechenden Durchmesser (34) aufweist.

3. Vorrichtung nach einem der vorhergehenden Ansprüche, **dadurch gekennzeichnet, dass** das Bauteil (10) auf einer der Antriebswelle (14, 52) aufgepressten Scheibe (56) in Montagerichtung (28) abgestützt ist.

4. Vorrichtung nach Anspruch 3, **dadurch gekennzeichnet, dass** der von der Kreissymmetrie abweichende Querschnittsbereich (16, 54) eine Phase (58) aufweist, auf die die Scheibe (56) kraftschlüssig gepresst ist.

5. Vorrichtung nach Anspruch 3 oder 4, **dadurch gekennzeichnet, dass** die Scheibe (56) in Montagerichtung (28) an einer Anlageschulter (60) abgestützt ist.

6. Vorrichtung nach einem der vorhergehenden Ansprüche, **dadurch gekennzeichnet, dass** der Innenkonus (26) vom Bauteil (10) und/oder der Außenkonus des Druckstücks (18, 102) gerändelt ist.

7. Vorrichtung nach Anspruch 6, **dadurch gekennzeichnet, dass** das Druckstück (18) aus Aluminium oder einer Aluminiumlegierung ist.

8. Vorrichtung nach einem der Ansprüche 1 bis 6, **dadurch gekennzeichnet, dass** der Außenkonus (100) des Druckstücks (102) oder der Innenkonus des Bauteils (10) mit einem weicheren Material (104) beschichtet ist.

9. Vorrichtung nach einem der vorhergehenden Ansprüche, **dadurch gekennzeichnet, dass** der Außenkonus (22, 100) des Druckstücks (18, 102) oder der Innenkonus des Bauteils (10) in Wellenlängsrichtung (8, 30) gestuft ausgeführt ist.

10. Vorrichtung nach einem der vorhergehenden Ansprüche, **dadurch gekennzeichnet, dass** das Bauteil (10) ein Blechteil ist.

## Claims

1. Device for fixing a part (10) on a drive shaft (14, 52) of a wiper system (62), the drive shaft (14, 52) having at least one cross-sectional region (16) deviating from circular symmetry, and with a pad (18, 102) which is inserted between the drive shaft (14, 52) and the part (10), has, already prior to installation, an opening (20) shaped corresponding to the cross-sectional region (16, 54) deviating from circular symmetry, and engages around the drive shaft (14, 52) in a form-fitting manner and has an external cone (22, 100) with which it is pressed via a releasable fixing element (24) on the drive shaft (14, 52) into a correspondingly shaped internal cone (26) of the part (10) and is fixed together with the part (10) in the shaft longitudinal direction (28, 30), with that cross-sectional region (16, 54) of the drive shaft (14, 52) which deviates from circular symmetry having an increasing diameter (32), at least in a region in the installation direction (28), and the pad (18, 102) being fixed frictionally in a manner free from play on the cross-sectional region (16, 54), **characterized in that** the pad (18, 102) and the drive shaft (14, 52) are connected in a form-fitting manner via two to six large supporting surfaces (36, 38, 40, 42, 44, 46, 48, 50), and **in that** the cross-sectional region (16) deviating from circular symmetry is designed as a twin-faced profile, square or hexagon or is of elliptical design.

2. Device according to Claim 1, **characterized in that** the opening (20) of the pad (18, 102) has a diameter (34) corresponding to the cross-sectional region (16, 54).

3. Device according to one of the preceding claims, **characterized in that** the component (10) is supported in the installation direction (28) on a disc (56) pressed onto the drive shaft (14, 52).

4. Device according to Claim 3, **characterized in that** the cross-sectional region (16, 54) deviating from circular symmetry has a phase (58) onto which the disc (56) is frictionally pressed.

5. Device according to Claim 3 or 4, **characterized in that** the disc (56) is supported in the installation direction (28) on a bearing shoulder (60).

6. Device according to one of the preceding claims, **characterized in that** the internal cone (26) of the part (10) and/or the external cone of the pad (18, 102) is knurled.

7. Device according to Claim 6, **characterized in that** the pad (18) is made from aluminium or an aluminium alloy.

8. Device according to one of Claims 1 to 6, **characterized in that** the external cone (100) of the pad (102) or the internal cone of the part (10) is coated with a softer material (104).

9. Device according to one of the preceding claims, **characterized in that** the external cone (22, 100) of the pad (18, 102) or the internal cone of the part (10) is of stepped design in the shaft longitudinal direction (8, 30).

10. Device according to one of the preceding claims, **characterized in that** the part (10) is a sheet-metal part.

## Revendications

1. Dispositif de fixation d'une pièce (10) sur un arbre d'entraînement (14, 52) d'une installation d'essuie-glace (62) selon lequel :
l'arbre d'entraînement (14, 52) a une zone de section (16) différente d'une symétrie circulaire et est entouré par une pièce de compression (18, 102), installée entre l'arbre d'entraînement (14, 52) et la pièce (10), et ayant une ouverture (20) de forme correspondant à la zone de section (16, 54) sans symétrie circulaire, dès avant le montage et entourant l'arbre d'entraînement (14, 52) par une liaison par la forme en ayant un cône extérieur (22, 100) avec lequel cette pièce par un élément de fixation amovible (24) sur l'arbre d'entraînement (14, 52) est poussée dans un cône intérieur de la pièce (10), de forme correspondante en étant bloquée en commun avec la pièce (10) dans la direction longitudinale (28, 30) de l'arbre, la zone de section (16, 54) sans symétrie circulaire de l'arbre d'entraînement (14, 52) a un diamètre (32), croissant au moins dans la zone de la direction de montage (28), et la pièce de compression (18, 102) est bloquée sans jeu par une liaison par la force sur la zone de section (16, 54),
**caractérisé en ce que**
la pièce de compression (18, 102) et l'arbre d'entraînement (14, 52) sont reliés par une liaison de forme ayant entre deux et six surfaces porteuses (36, 38, 40, 42, 44, 46, 48, 50), et
la zone de section (16) sans symétrie circulaire est réalisée sous la forme d'un élément à deux pans, quatre pans ou six pans ou de forme elliptique.

2. Dispositif selon la revendication 1,
**caractérisé en ce que**
l'ouverture (20) de la pièce de compression (18, 102) a un diamètre (34) correspondant à la zone de section (16, 54).

3. Dispositif selon l'une des revendications précédentes,
**caractérisé en ce que**
la pièce (10) est appuyée dans la direction de montage (28) sur un disque (56) pressé sur l'arbre d'entraînement (14, 52).

4. Dispositif selon la revendication 3,
**caractérisé en ce que**
la zone de section (16, 54) sans symétrie circulaire comporte un congé (58) qui est pressé par une liaison de force sur le disque (56).

5. Dispositif selon la revendication 3 ou 4,
**caractérisé en ce que**
le disque (56) est appuyé contre un épaulement de butée (60) dans la direction de montage (28).

6. Dispositif selon l'une des revendications précédentes,
**caractérisé en ce que**
le cône intérieur (26) de la pièce (10) et/ou le cône extérieur de la pièce de compression (18, 102) est(sont) moleté (s).

7. Dispositif selon la revendication 6,
**caractérisé en ce que**
la pièce de compression (18) est en aluminium ou en alliage d'aluminium.

8. Dispositif selon l'une des revendications 1 à 6,
**caractérisé en ce que**
le cône extérieur (100) de la pièce de compression (102) ou le cône intérieur de la pièce (10) est revêtu d'une matière moins dure (104).

9. Dispositif selon l'une des revendications précédentes,
**caractérisé en ce que**
le cône extérieur (22, 100) de la pièce de compression (18, 102) ou le cône intérieur de la pièce (10) est étagé dans la direction longitudinale (8, 30) de l'arbre.

10. Dispositif selon l'une des revendications précédentes,
**caractérisé en ce que**
la pièce (10) est en tôle.
